(19) Europäisches Patentamt / European Patent Office / Office européen des brevets

(11) **EP 4 527 875 B1**

(12) **EUROPEAN PATENT SPECIFICATION**

(45) Date of publication and mention
of the grant of the patent:
**22.04.2026   Bulletin 2026/17**

(21) Application number: **22949503.1**

(22) Date of filing: **07.11.2022**

(51) International Patent Classification (IPC):
**C04B 35/622** *(2006.01)*     **C08G 77/60** *(2006.01)*
**D01F 9/10** *(2006.01)*      **C04B 35/571** *(2006.01)*

(52) Cooperative Patent Classification (CPC):
**C01B 32/956; C01B 32/977; C04B 35/571;
C04B 35/62281; C08G 77/60; D01F 9/08;**
C04B 2235/483

(86) International application number:
**PCT/JP2022/041311**

(87) International publication number:
**WO 2024/004230 (04.01.2024 Gazette 2024/01)**

(54) **METHOD FOR PRODUCING SILICON CARBIDE FIBERS**

VERFAHREN ZUR HERSTELLUNG VON SILICIUMCARBIDFASERN

PROCÉDÉ DE PRODUCTION DE FIBRES DE CARBURE DE SILICIUM

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **01.07.2022   JP 2022107345**

(43) Date of publication of application:
**26.03.2025   Bulletin 2025/13**

(73) Proprietor: **Kureha Corporation**
**Chuo-ku**
**Tokyo 103-8552 (JP)**

(72) Inventors:
• **NAITO, Ryota**
**Tokyo 103-8552 (JP)**
• **SAITO, Junki**
**Tokyo 103-8552 (JP)**
• **IUCHI, Ryo**
**Tokyo 103-8552 (JP)**
• **YAMAKAWA, Koji**
**Tokyo 103-8552 (JP)**
• **GOTO, Tatsuru**
**Tokyo 103-8552 (JP)**

(74) Representative: **Novagraaf Group**
**Chemin de l'Echo 3**
**1213 Onex / Geneva (CH)**

(56) References cited:
JP-A- 2000 045 130     JP-A- 2019 137 935
JP-A- H06 200 035      JP-A- H11 199 779
JP-A- S5 783 529       JP-A- S6 485 225

• OKAMURA K: "Ceramic fibres from polymer
precursors", COMPOSITES,, vol. 18, no. 2, 1 April
1987 (1987-04-01), pages 107 - 120, XP001268678

Description

## TECHNICAL FIELD

The present invention relates to a method for producing polycarbosilane for silicon carbide fiber production, and a method for producing silicon carbide fibers.

## BACKGROUND ART

Patent Document 1 describes a method in which polycarbosilane is synthesized from polysilane by a liquid phase-gas phase thermolysis condensation method, and silicon carbide fibers are produced from the synthesized polycarbosilane.

Patent Document 2 describes a super heat-resistant silicon carbide fibers and a production method thereof and describes a method for producing polycarbosilane by an autoclave method using a cyclic silane compound as a raw material.

Patent Document 3 describes a method for producing a ceramic molded article and describes a method for producing polycarbosilane by an autoclave method using polysilane as a raw material.

K. Okamura, Ceramic fibres from polymer precursors, Composites, Vol. 18, No. 2, 1 April 1987, pages 107 to 120, describes the synthesis of silicon carbide fibers from polycarbosilane by the pyrolysis of organometallic polymers. $Si_xN_yC_z$, Si-Ti-C-O, and Si-N-O fibers have been synthesized by the pyrolysis of polysilazane, polytitanocarbosilane and the nitridation of polycarbosilane, respectively. These ceramic fibers are promising as reinforcement in composites. Specifically, a review is given of organometallic polymers as precursors for ceramic fibers, conversion processes from polymer to ceramic, and the mechanical properties of ceramic fibers.

## CITATION LIST

### PATENT DOCUMENT

Patent Document 1: JP 2019-137935 A
Patent Document 2: JP H04-194028 A
Patent Document 3: JP H01-257177 A

## SUMMARY OF INVENTION

### TECHNICAL PROBLEM

In a method for producing polycarbosilane for silicon carbide fiber production, a large number of processes leads to complexity and a high production cost, and thus a technology to simply and easily produce polycarbosilane for silicon carbide fiber production with a low cost is in demand.

The present invention was completed in light of the issues described above, and an object of the present invention is to provide a method for producing polycarbosilane for silicon carbide fiber production having fewer processes than known art in a method for producing polycarbosilane by a liquid phase-gas phase thermolysis condensation method.

### SOLUTION TO PROBLEM

As a result of diligent research, the inventors of the present invention found that use of a cyclic silane compound as a raw material enables to produce polycarbosilane for silicon carbide fiber production with fewer processes than known production methods in a method for producing polycarbosilane by a liquid phase-gas phase thermolysis condensation method and thus completed the present invention.

The method for producing polycarbosilane for silicon carbide fiber production according to an aspect of the present invention includes: a polycarbosilane synthesis step of synthesizing polycarbosilane having a weight average molecular weight of 9000 or greater, the polycarbosilane synthesis step including the processes of: heating a raw material containing a cyclic silane compound at a first temperature to generate a gas phase, heating the gas phase at a second temperature higher than the first temperature to generate polycarbosilane, and by cooling the polycarbosilane to return to the raw material and heating the returned polycarbosilane at the first temperature, increasing a molecular weight of the polycarbosilane.

The method for producing silicon carbide fibers according to the present invention includes:
a polycarbosilane synthesis step of synthesizing polycarbosilane having a weight average molecular weight of 9000 or greater, the polycarbosilane synthesis step including performing repeatedly the processes of:

heating a raw material containing a cyclic silane compound at a first temperature to generate a gas phase, heating the gas phase at a second temperature higher than the first temperature to generate polycarbosilane, and by cooling the polycarbosilane to return to the raw material and heating the returned polycarbosilane at the first temperature, increasing a molecular weight of the polycarbosilane;
a spinning step of forming the polycarbosilane synthesized in the polycarbosilane synthesis step into a fibrous form; and
a pyrolyzing step of pyrolyzing the polycarbosilane fiber produced in the spinning step;
wherein the method does not include a step of adjusting the molecular weight by removing polycarbosilane having a low molecular weight, whereby "low" means a molecular weight of 5500 or less, from the polycarbosilane synthesized in the polycarbosilane synthesis step.

## ADVANTAGEOUS EFFECTS OF INVENTION

According to the present invention, polycarbosilane for silicon carbide fiber production can be produced by fewer processes than known production methods for a method for producing polycarbosilane by a liquid phase-gas phase thermolysis condensation method.

## BRIEF DESCRIPTION OF THE DRAWINGS

FIG. 1 is a view illustrating a liquid phase-gas phase thermolysis apparatus 10 that can be used for polycarbosilane synthesis.
FIG. 2 is a diagram illustrating melting behavior of polycarbosilane and tensile strength of SiC fibers obtained through pyrolyzing at 1000°C.
FIG. 3 is a chart illustrating the relationship between the number of molecular weight adjustment and total yield after a synthesis step.

## DESCRIPTION OF EMBODIMENTS

1. Method for Producing Polycarbosilane for Silicon Carbide Fiber Production

The method for producing polycarbosilane for silicon carbide fiber production according to an aspect of the present invention (hereinafter, referred to as "method for producing polycarbosilane") includes: a polycarbosilane synthesis step of synthesizing polycarbosilane having a weight average molecular weight of 9000 or greater, the polycarbosilane synthesis step including the processes of: heating a raw material containing a cyclic silane compound at a first temperature to generate a gas phase (hereinafter, referred to as "first heating process"), heating the gas phase at a second temperature higher than the first temperature to generate polycarbosilane (hereinafter, referred to as "second heating process"), and by cooling the polycarbosilane to return to the raw material and by heating the returned polycarbosilane at the first temperature, increasing a molecular weight of the polycarbosilane (hereinafter, referred to as "molecular weight increasing process"). According to such a configuration, polycarbosilane for silicon carbide fiber production can be produced by fewer processes than known production methods for a method for producing polycarbosilane by a liquid phase-gas phase thermolysis condensation method.
The reason is as follows. Polycarbosilane produced by the method for producing polycarbosilane for silicon carbide fiber production according to the present invention is characterized in that fibers are less likely to fuse during pyrolyzing in the producing process of silicon carbide fibers. Thus, performing a molecular weight adjustment step to remove low molecular weight polycarbosilane having a molecular weight of 5500 or less, which can be a cause of fusion, is not required, and the polycarbosilane for silicon carbide fiber production can be produced by fewer processes than known production methods for a method for producing polycarbosilane by a liquid phase-gas phase thermolysis condensation method. Note that the polycarbosilane having a low molecular weight refers to polycarbosilane having a molecular weight of 5500 or less.
In the present description, "molecular weight adjustment step" refers to a step of removing polycarbosilane having a molecular weight of 5500 or less from the polycarbosilane synthesized in the polycarbosilane synthesis step. Examples of the method for removing polycarbosilane having a molecular weight of 5500 or less include a method of removing polycarbosilane having a molecular weight of 5500 or less including adding a solvent to the polycarbosilane synthesized in the polycarbosilane synthesis step and removing a dissolved component. In general, the solvent to add to the polycarbosilane is not particularly limited as long as it is a solvent capable of extracting polycarbosilane having a molecular weight of 5500 or less, and is appropriately selected depending on the range of molecular weights desired to be removed.

Polycarbosilane Synthesis Step

The polycarbosilane synthesis step is a step that includes a first heating process, a second heating process, and a molecular weight increasing process and that synthesizes polycarbosilane having a weight average molecular weight of 9000 or greater.

The first heating process is a process of generating a gas phase by heating a raw material containing a cyclic silane compound at a first temperature. The raw material containing the cyclic silane compound may be a solid, a liquid, or a mixture of a liquid and a solid. As used herein, the first temperature shows the measurement result of an internal temperature of a reaction vessel in which the raw material is placed. That is, the first temperature is the temperature of a content itself of the reaction vessel. The first temperature is not particularly limited as long as it is a temperature at which at least a part of the cyclic silane compound can be vaporized to generate a gas phase. Typically, it may be in a range of from 100°C to 500°C, and may be in a range of from 400°C to 500°C. When heating is performed at the temperature, the cyclic silane compound is thermally decomposed to generate a gas phase, and the gas phase is also generated by sublimation or vaporization after liquefaction of the cyclic silane compound.

In the method for producing polycarbosilane according to the present invention, the cyclic silane compound is a compound having a skeleton composed only of a Si-Si bond as a main chain, and the main chain forms a ring. The number of members of the cyclic silane compound used in the method for producing the polycarbosilane is preferably 15 or less, more preferably 10 or less, and even more preferably 7 or less. The cyclic silane compound may have a single ring or a plurality of rings. In addition, the side chain of the cyclic silane compound may have any structure. Examples of the cyclic silane compound include octamethylcyclotetrasilane, decamethylcyclopentasilane, dodecamethylcyclohexasilane, and tetradecamethylcycloheptasilane. From the viewpoint of raw material supply, the cyclic silane compound is preferably dodecamethylcyclohexasilane.

An amount of the cyclic silane compound used in the polycarbosilane synthesis step can be appropriately adjusted depending on an apparatus for synthesizing the polycarbosilane and a desired amount of the polycarbosilane synthesized.

The second heating process is a process of heating the gas phase generated in the first heating process at a second temperature higher than the first temperature to generate polycarbosilane. By the second heating process, the Si-Si bond of the cyclic silane compound can be radically cleaved and rearranged to produce polycarbosilane. As used herein, the second temperature shows the measurement result of an internal temperature of a reaction tube which contains the gas phase, when the gas phase generated from the raw material containing the cyclic silane compound is heated. That is, the second temperature is the temperature of the gas phase itself heated in the second heating process. The generated polycarbosilane is cooled and returned to the raw material undergoing the first heat process.

From the viewpoint of the oxygen content of the synthesized polycarbosilane, the oxygen content of the polycarbosilane is unlikely to increase, and thus the second temperature is preferably 670°C or lower, more preferably 650°C or lower, and even more preferably 600°C or lower. As a result of the study, in the method of the present embodiment using the cyclic silane compound as the raw material, it is confirmed that the viscosity of the generated polycarbosilane is significantly increased when the second temperature is raised, and clogging of the pipe is caused depending on the apparatus. Accordingly, from the viewpoint of operability of the apparatus for synthesizing the polycarbosilane, the second temperature is preferably 650°C or lower to prevent the pipe of the apparatus from being clogged with the synthesized polycarbosilane. In addition, the second temperature is preferably 500°C or higher from the viewpoint of rearranging the cyclic silane compound, and is preferably 600°C or higher from the viewpoint of increasing branching of the polycarbosilane. Note that the branching of the polycarbosilane will be described below.

The molecular weight increasing process is a process in which the polycarbosilane generated in the second heating process is cooled, returned to the raw material, and heated at the first temperature to increase the molecular weight of the polycarbosilane. By the molecular weight increasing process, the polycarbosilane generated by the second heating process can be polycondensed to increase the molecular weight. The cooling temperature is not particularly limited as long as the polycarbosilane in a gaseous state can be cooled to such an extent that it is liquefied. The first temperature is the same as the description of the first temperature in the first heating process.

When a series of these reactions is repeatedly performed, the molecular weight of the polycarbosilane is gradually increased and polycarbosilane having a higher molecular weight can be obtained.

The reaction time in the polycarbosilane synthesis step can be appropriately adjusted based on the first temperature. By adjusting the first temperature and the reaction time, the weight average molecular weight of the polycarbosilane can be adjusted. From the viewpoint of obtaining polycarbosilane having a weight average molecular weight of 9000 or greater, in a case where the first temperature is from 400 to 500°C, the reaction time may be 6 hours or longer. As the first temperature is lower, the reaction time can be made longer, and as the first temperature is higher, the reaction time can be made shorter.

As described above, polycarbosilane synthesized by the polycarbosilane synthesis step described above becomes polycarbosilane having a weight average molecular weight of 9000 or greater. Thus, according to the method for producing polycarbosilane for silicon carbide fiber production according to an aspect of the present invention, the polycarbosilane for silicon carbide fiber production can be produced without performing a molecular weight adjustment step.

Furthermore, the polycarbosilane produced in the polycarbosilane synthesis step preferably has a bonding index expressed by the following Formula (1), which is an indicator of a degree of branching, of 2.52 or greater from the viewpoint of improving tensile strength of the silicon carbide fibers:

[Math. 1]

$$\text{BONDING INDEX} = \frac{X_{CH3} \times 1 + X_{CH2} \times 2 + X_{CH} \times 3 + X_C \times 4 + Y_{SiH3} \times 1 + Y_{SiH2} \times 2 + Y_{SiH} \times 3 + Y_{Si} \times 4}{X_{CH3} + X_{CH2} + X_{CH} + X_C + Y_{SiH3} + Y_{SiH2} + Y_{SiH} + Y_{Si}} \cdots (1)$$

where in Formula (1),

$X_{CH3}$, $X_{CH2}$, $X_{CH}$, and $X_C$ are values obtained by dividing weight percentages of primary, secondary, tertiary, and quaternary carbon atoms, respectively, by 12, and
$Y_{SiH3}$, $Y_{SiH2}$, $Y_{SiH}$, and $Y_{Si}$ are values obtained by dividing weight percentages of primary, secondary, tertiary, and quaternary silicon atoms, respectively, by 28.086.

The term "bonding index" as used herein is an indicator of the degree of branching of polycarbosilane and is a value determined by Formula (1) described above. As used herein, the term "branching" refers to a moiety in which a carbon atom or silicon atom is bonded to an atom other than a hydrogen atom. For example, branching of $CH_3$-$CH_3$ refers to a moiety in which the carbon atom described on the left is bonded to an atom other than a hydrogen atom and a moiety in which the carbon atom described on the right is bonded to an atom other than a hydrogen atom. Similarly, branching of silicon atoms refers to a moiety in which all silicon atoms are bonded to an atom other than a hydrogen atom. Thus, a higher bonding index leads to a more highly branched polycarbosilane.

In Formula (1), $X_{CH3}$, $X_{CH2}$, $X_{CH}$, and $X_C$ are values obtained by dividing weight percentages of primary, secondary, tertiary, and quaternary carbon atoms, respectively, by 12. As used herein, the term "primary carbon" refers to a carbon to which three hydrogens are bonded. The term "secondary carbon" refers to a carbon to which two hydrogens are bonded. The term "tertiary carbon" refers to a carbon to which one hydrogen is bonded. The term "quaternary carbon" refers to a carbon to which no hydrogen is bonded. In Formula (1), 12 is the atomic weight of carbon. Thus, $X_{CH3}$, $X_{CH2}$, $X_{CH}$, and $X_C$ are specifically as represented by Formulas (2) to (5) described below:

[Math. 2]

$$X_{CH3} = \frac{\text{wt.\% of Primary carbon atoms}}{12} \cdots (2)$$

[Math. 3]

$$X_{CH2} = \frac{\text{wt.\% of Secondary carbon atoms}}{12} \cdots (3)$$

[Math. 4]

$$X_{CH} = \frac{\text{wt.\% of Tertiary carbon atoms}}{12} \cdots (4)$$

[Math. 5]

$$X_C = \frac{\text{wt.\% of Quaternary carbon atoms}}{12} \quad \cdots (5)$$

Here, the weight percentages of primary, secondary, and tertiary carbon atoms are values obtained by dividing the weight percentage of hydrogen atoms of each carbon by a product of the number of hydrogen atoms bonded to each carbon and the atomic weight of hydrogen, and multiplying the result by the atomic weight of carbon. Note that as used herein, 1 is assumed to be the atomic weight of hydrogen and used for calculation. The weight percentage of the quaternary carbon atom is a value obtained by subtracting the weight percentages of the primary, secondary, and tertiary carbon atoms from the elemental analysis value of carbon atoms. Thus, the weight percentages of primary, secondary, tertiary, and quaternary carbon atoms are specifically as represented by Formulas (6) to (9) described below: The elemental analysis value of carbon atoms can be determined by a known method.

[Math. 6]

$$\text{wt.\% of Primary carbon atoms} = \frac{\text{wt.\% of Hydrogen atoms of primary carbon}}{3} \times 12 \quad \cdots (6)$$

[Math. 7]

$$\text{wt.\% of Secondary carbon atoms} = \frac{\text{wt.\% of Hydrogen atoms of secondary carbon}}{2} \times 12 \quad \cdots (7)$$

[Math. 8]

$$\text{wt.\% of Tertiary carbon atoms} = \frac{\text{wt.\% of Hydrogen atoms of tertiary carbon}}{1} \times 12 \quad \cdots (8)$$

[Math. 9]

wt.% of Quaternary carbon atoms =
Elemental analysis value of carbon atoms (wt.%) - (wt.% of Primary carbon atoms + wt.% of Secondary carbon atoms + wt.% of Tertiary carbon atoms)

$$\cdots (9)$$

Here, the weight percentages of hydrogen atoms of primary, secondary, and tertiary carbons are values obtained by multiplying area ratios of $^1$H-NMR of primary, secondary, and tertiary carbons by the elemental analysis value of hydrogen atoms, respectively. The area ratios of $^1$H-NMR of primary, secondary, and tertiary carbons are ratios of respective area ratios of hydrogen atoms of primary, secondary, and tertiary carbons to hydrogen atoms of Si-H measured by $^1$H-NMR and a total value of area ratios obtained by normalizing area values of hydrogen atoms of primary, secondary, and tertiary carbons with hydrogen atoms of Si-H. Thus, the weight percentages of the hydrogen atoms of the primary, secondary, and tertiary carbons are specifically as represented by Formulas (10) to (12) described below:

[Math. 10]

wt.% of Hydrogen atoms of primary carbon =
Area ratio of $^1$H-NMR of primary carbon × Elemental analysis value of hydrogen atoms (wt.%) $\cdots (10)$

[Math. 11]

wt.% of Hydrogen atoms of secondary carbon =
Area ratio of $^1$H-NMR of secondary carbon × Elemental analysis value of hydrogen atoms (wt.%) $\cdots (11)$

[Math. 12]

wt.% of Hydrogen atoms of tertiary carbon =
Area ratio of $^1$H-NMR of tertiary carbon × Elementary analysis value of hydrogen atoms (wt.%) $\cdots (12)$

The area values of the hydrogen atoms of the primary, secondary, and tertiary carbons in the polycarbosilane in $^1$H-NMR can be determined by calculating integration values using a signal of 5.5 to 3.5 ppm as a signal derived from hydrogen on tertiary silicon (-SiH<), a signal of 1.0 to 0 ppm as a signal derived from hydrogen on primary carbon ($CH_3$-), a signal of 0 to -0.4 ppm as a signal derived from hydrogen on secondary carbon (-$CH_2$-), and a signal of -0.4 to -1.0 ppm as a signal derived from hydrogen on tertiary carbon (-CH<). The elemental analysis value of hydrogen atoms can be determined by a known method.

In Formula (1), $Y_{SiH3}$, $Y_{SiH2}$, $Y_{SiH}$, and $Y_{Si}$ are values obtained by dividing the weight percentages of primary, secondary, tertiary, and quaternary silicon atoms, respectively, by 28.086. As used herein, the term "primary silicon" refers to silicon to which three hydrogens are bonded. The term "secondary silicon" refers to silicon to which two hydrogens are bonded. The term "tertiary silicon" refers to silicon to which one hydrogen is bonded. The term "quaternary silicon" refers to silicon to which no hydrogen is bonded. In Formula (1), 28.086 is the atomic weight of silicon. Thus, $Y_{SiH3}$, $Y_{SiH2}$, $Y_{SiH}$, and $Y_{Si}$ are specifically as represented by Formulas (13) to (16) described below:

[Math. 13]

$$Y_{SiH3} = \frac{\text{wt.\% of Primary silicon atoms}}{28.086} \quad \cdots (13)$$

[Math. 14]

$$Y_{SiH2} = \frac{\text{wt.\% of Secondary silicon atoms}}{28.086} \quad \cdots (14)$$

[Math. 15]

$$Y_{SiH} = \frac{\text{wt.\% of Tertiary silicon atoms}}{28.086} \quad \cdots (15)$$

[Math. 16]

$$Y_{Si} = \frac{\text{wt.\% of Quaternary silicon atoms}}{28.086} \quad \cdots (16)$$

Here, the weight percentages of primary, secondary, tertiary, and quaternary silicon atoms are values obtained by multiplying area ratios of $^{29}$Si-NMR of primary, secondary, tertiary, and quaternary silicon atoms by the elemental analysis value of silicon atoms. The area ratios of $^{29}$Si-NMR of primary, secondary, tertiary, and quaternary silicon atoms are ratios of respective area ratios of primary, secondary, tertiary, and quaternary silicon atoms to a total value of area ratios of primary, secondary, tertiary, and quaternary silicon atoms normalized by quaternary silicon atoms. The weight percentages of primary, secondary, tertiary, and quaternary silicon atoms are thus specifically as represented by Formulas (17) to (20) described below:

[Math. 17]

wt.% of Primary silicon atoms =
Area ratio of $^{29}$Si-NMR of primary silicon atoms × Elemental analysis value of silicon atoms (wt.%) $\cdots (17)$

[Math. 18]

wt.% of Secondary silicon atoms =
Area ratio of $^{29}$Si-NMR of secondary silicon atoms × Elemental analysis value of silicon atoms (wt.%) $\cdots (18)$

[Math. 19]

wt.% of Tertiary silicon atoms =
Area ratio of $^{29}$Si-NMR of tertiary silicon atoms × Elemental analysis value of silicon atoms (wt.%) $\cdots (19)$

[Math. 20]

$$\text{wt.\% of Quaternary silicon atoms} =$$
$$\text{Area ratio of } ^{29}\text{Si-NMR of quaternary silicon atoms} \times \text{Elemental analysis value of silicon atoms (wt.\%)} \quad \cdots (20)$$

The area ratios of primary, secondary, tertiary, and quaternary silicon atoms in the polycarbosilane in $^{29}$Si-NMR can be determined by calculating integration values using a signal of 10 to -8 ppm as a signal derived from quaternary silicon (>Si<), a signal of -8 to -24 ppm as a signal derived from tertiary silicon (-SiH<), a signal of -30 to -50 ppm as a signal derived from secondary silicon (-SiH$_2$-), and a signal of -40 to -70 ppm as a signal derived from primary silicon (-SiH$_3$). The elemental analysis value of silicon atoms can be determined by a known method.

The bonding index can be calculated by the calculation method described above.

Furthermore, the polycarbosilane produced in the polycarbosilane synthesis step has a higher softening point compared to that of polycarbosilane obtained by using polysilane that is not cyclic. In the present description, "softening point" refers to a temperature at which polycarbosilane starts to melt. Accordingly, the polycarbosilane of the present embodiment can prevent fusion of fibers during pyrolyzing. Specifically, in a case where the polycarbosilane powder is heated at 390°C for 2 minutes, the polycarbosilane of the present embodiment preferably remained in powder state although some parts of the polycarbosilane are melted, and more preferably completely remains in powder state. More specifically, the softening point in the present embodiment is preferably 400°C or higher, more preferably 500°C or higher at which the polycarbosilane actively increases its molecular weight and crosslinks, and even more preferably 600°C or higher at which pyrolysis of the polycarbosilane to silicon carbide actively occurs.

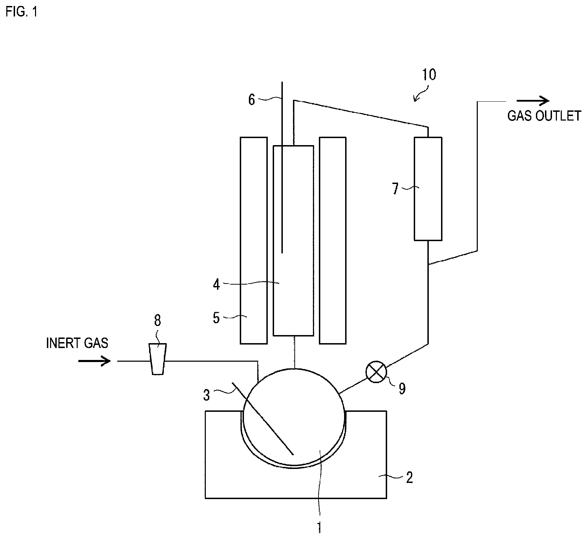

With reference to FIG. 1, one embodiment of the polycarbosilane synthesis step will be described. FIG. 1 is a view illustrating a liquid phase-gas phase thermolysis apparatus 10 for use in polycarbosilane synthesis.

The liquid phase-gas phase thermolysis apparatus 10 includes a liquid phase reaction vessel 1, a liquid phase heater 2, a liquid phase thermocouple 3, a gas phase reaction tube 4, a gas phase heater 5, a gas phase thermocouple 6, a first cooling tube 7, a flowmeter 8, and a valve 9.

First, a cyclic silane compound is placed in the liquid phase reaction vessel 1 and heated at the first temperature by using the liquid phase heater 2 under an inert gas to generate a gas phase. As the inert gas, for example, nitrogen, argon, or the like can be used. The first temperature is measured using the liquid phase thermocouple 3. An amount of the inert gas is adjusted using the flowmeter 8.

Next, the generated gas phase moves to the gas phase reaction tube 4 and is heated at the second temperature using the gas phase heater 5 to produce polycarbosilane. The second temperature is measured using the gas phase thermocouple 6.

Next, the generated polycarbosilane is cooled by the first cooling pipe 7 and the liquid phase is returned to the liquid phase reaction vessel 1 and heated at the first temperature using the liquid phase heater 2 to increase the molecular weight of the polycarbosilane.

A series of these reactions are repeatedly performed, and after a predetermined reaction time elapses, the liquid phase and the gas phase are cooled and the synthesized polycarbosilane is collected from the liquid phase reaction vessel 1. In this way, polycarbosilane is obtained.

Other Steps

The production method according to the one aspect of the present invention may include a step other than the polycarbosilane synthesis step. Other steps are not particularly limited as long as the effects of the present invention are not impaired.

The production method according to the one aspect of the present invention may include, after the polycarbosilane synthesis step, a removal step of adding a solvent to the synthesized polycarbosilane and removing an insoluble component. It is possible to remove impurities contained in the polycarbosilane by the removal step. The insoluble component may be removed by filtration, for example. The solvent is not particularly limited as long as it is capable of extracting the polycarbosilane. Examples of the solvent include: aromatic hydrocarbons such as benzene, toluene, ethylbenzene, xylene, and mesitylene; aliphatic hydrocarbons such as hexane, heptane, octane, and nonane; and halogenated hydrocarbons such as chloroform and dichloromethane. An amount of the solvent to be added only needs to be an amount in which the polycarbosilane is dissolved, and can be appropriately set by those skilled in the art. The extraction temperature can be appropriately set by those skilled in the art and may be, for example, room temperature (22°C).

Furthermore, the polycarbosilane produced by the production method according to an aspect of the present invention results in a higher yield of the polycarbosilane after the molecular weight adjustment compared to polycarbosilane produced by undergoing a molecular weight adjustment step. Note that, in the present description, "yield of polycarbosilane after molecular weight adjustment" refers to the yield of PCS after removal of insoluble component from the synthesized PCS following the molecular weight adjustment.

2. Method for Producing Silicon Carbide Fiber

The method for producing silicon carbide fibers (hereinafter, also referred to as "SiC fibers") according to an aspect of the present invention includes:
a polycarbosilane synthesis step of synthesizing polycarbosilane having a weight average molecular weight of 9000 or greater, the polycarbosilane synthesis step including the processes of:

heating a raw material containing a cyclic silane compound at the first temperature to generate a gas phase, heating the gas phase at the second temperature higher than the first temperature to generate polycarbosilane, and by cooling the polycarbosilane to return to the raw material and heating at the first temperature, increasing a molecular weight of the polycarbosilane;
a spinning step of forming the polycarbosilane synthesized in the polycarbosilane synthesis step into a fibrous form; and
a pyrolyzing step of pyrolyzing the polycarbosilane fiber produced in the spinning step. With such a configuration, it is possible to produce SiC fibers having a high tensile strength.

Furthermore, according to the method for producing silicon carbide fibers according to an aspect of the present invention because the yield of the polycarbosilane after the molecular weight adjustment improves, the total yield after the synthesis step improves. Thus, according to the method for producing silicon carbide fibers according to an aspect of the present invention, the yield of the silicon carbide fibers from the polycarbosilane can be improved. In the present description, "total yield after the synthesis step" refers to the product of a PCS yield (%) after molecular weight adjustment and a ceramic yield (%). The term "ceramic yield (%)" refers to the yield of SiC fibers after pyrolyzing from green fibers.

Polycarbosilane Synthesis Step

The description of the polycarbosilane synthesis step is the same as the polycarbosilane synthesis step in "1. Method for Producing Polycarbosilane for Silicon Carbide Fiber Production".

Spinning Step

The spinning step is a step of forming the polycarbosilane synthesized in the polycarbosilane synthesis step into a fibrous form.
Examples of the spinning method include a melt spinning method, a dry spinning method, and a wet spinning method. The dry spinning method is preferable from the viewpoint that spinning can be performed not necessarily under a high temperature condition and a rapid temperature drop does not occur after spinning, whereby variation in fiber diameter can be reduced. In a case where the dry spinning method is performed, spinning can be performed by, for example, the following method. That is, the polycarbosilane according to the one aspect of the present invention is dissolved in a solvent to prepare a dry spinning solution. The dry spinning solution is then charged into a spinning apparatus to generate polycarbosilane fibers.
A solvent for dissolving the polycarbosilane may be any solvent capable of dissolving the polycarbosilane, and examples thereof include: aromatic hydrocarbons such as benzene, toluene, ethylbenzene, xylene, and mesitylene; aliphatic hydrocarbons such as hexane, heptane, octane, and nonane; and halogenated hydrocarbons such as chloroform and dichloromethane. Toluene or xylene is preferably used because of being excellent in solubility of polycarbosilane and volatility.
A concentration of the dry spinning solution can be appropriately adjusted by those skilled in the art, and may be, for example, 50 to 70%.
A viscosity of the dry spinning solution can be appropriately adjusted by those skilled in the art depending on a nozzle diameter of the spinning apparatus. For example, in a case of a nozzle diameter of 65 $\mu$m, the viscosity may be 10 to 30 Pa·s at 25°C. The viscosity can be determined by a known method for measuring the viscosity of a solution, and can be measured, for example, by using an E-type viscometer.
As the spinning apparatus used for spinning, an apparatus usually used in the present technical field only needs to be used. For example, a green fiber can be obtained by supplying the dry spinning solution to the spinning apparatus and performing spinning under conditions of a spinning nozzle diameter of 65 $\mu$m, discharge pressures of 2 to 3.5 MPa, and a spinning speed of 10 to 30 mg/min. The green fiber generated under such conditions may be, for example, polycarbosilane fibers having a green fiber diameter of 17.0 to 19.0 $\mu$m.

Pyrolyzing Step

The pyrolyzing step is a step of pyrolyzing the polycarbosilane fibers generated by the spinning step. It is possible to generate silicon carbide fibers by pyrolyzing the polycarbosilane fibers to convert them into ceramics.

The pyrolyzing conditions can be appropriately set by those skilled in the art. For example, the pyrolyzing may be performed under conditions described in Table 1 below. Further, the pyrolyzing may be performed under a condition in which the highest temperature in Table 1 is changed to 1400°C. From the viewpoint of obtaining SiC fibers having a high tensile strength, the maximum temperature is preferably set to 1000°C.

The tensile strength can be measured by a known method. For example, a tensile test on a monofilament is performed to measure a breaking stress, and the breaking stress is divided by a cross-sectional area of the SiC fiber, whereby the tensile strength can be obtained.

A modulus of elasticity is a value calculated by dividing the obtained tensile strength by an elongation percentage with respect to a gauge length at the time of the tensile test.

Summary

The method for producing silicon carbide fibers according to a first aspect of the present invention includes: a polycarbosilane synthesis step of synthesizing polycarbosilane having a weight average molecular weight of 9000 or greater, the polycarbosilane synthesis step including performing repeatedly:

a process of heating a raw material containing a cyclic silane compound at a first temperature to generate a gas phase, a process of heating the gas phase at a second temperature higher than the first temperature to generate polycarbosilane, and a process of cooling and returning the polycarbosilane to the raw material and heating the returned polycarbosilane at the first temperature to increase a molecular weight of the polycarbosilane;

a spinning step of forming the polycarbosilane synthesized in the polycarbosilane synthesis step into a fibrous form; and

a pyrolyzing step of pyrolyzing the polycarbosilane fiber produced in the spinning step;

the method containing no molecular weight adjustment step of removing, from the polycarbosilane synthesized in the polycarbosilane synthesis step, polycarbosilane having a molecular weight of 5500 or less.

Furthermore, in the method for producing silicon carbide fibers according to a second aspect of the present invention, polycarbosilane having a bonding index, which is an indicator of a degree of branching, expressed by the following Formula (1) of 2.52 or greater is preferably synthesized in the above-described polycarbosilane synthesis step:
[Math. 21]

$$\text{BONDING INDEX} = \frac{X_{CH3} \times 1 + X_{CH2} \times 2 + X_{CH} \times 3 + X_C \times 4 + Y_{SiH3} \times 1 + Y_{SiH2} \times 2 + Y_{SiH} \times 3 + Y_{Si} \times 4}{X_{CH3} + X_{CH2} + X_{CH} + X_C + Y_{SiH3} + Y_{SiH2} + Y_{SiH} + Y_{Si}} \cdots (1)$$

where in Formula (1),

$X_{CH3}$, $X_{CH2}$, $X_{CH}$, and $X_C$ are values obtained by dividing weight percentages of primary, secondary, tertiary, and quaternary carbon atoms, respectively, by 12, and

$Y_{SiH3}$, $Y_{SiH2}$, $Y_{SiH}$, and $Y_{Si}$ are values obtained by dividing weight percentages of primary, secondary, tertiary, and quaternary silicon atoms, respectively, by 28.086.

Furthermore, in the method for producing silicon carbide fibers according to a third aspect of the present invention, polycarbosilane satisfying the following condition is preferably synthesized in the polycarbosilane synthesis step in the first or second aspect:

a synthesized polycarbosilane powder remains in powder stated when heated at 390°C for 2 minutes.

Furthermore, in the method for producing silicon carbide fibers according to a fourth aspect of the present invention, the cyclic silane compound in the first or second aspect is preferably dodecamethylcyclohexasilane.

Furthermore, in the method for producing silicon carbide fibers according to a fifth aspect of the present invention, the cyclic silane compound in the third aspect is preferably dodecamethylcyclohexasilane.

**EXAMPLES**

Embodiments of the present invention will be further described in detail using the examples below. Needless to say, the present invention is not limited to the following examples, and details of the present invention can be in various manners. Note that reagents and apparatuses whose manufacturers are not described in the examples were those commonly used in the art.

1. Synthesis of Polycarbosilane (PCS)

Synthesis Example 1

Dodecamethylcyclohexasilane (DMCHS) was placed in a liquid phase reaction vessel of a liquid phase-gas phase thermolysis apparatus as illustrated in FIG. 1. Next, the liquid phase in the liquid phase reaction vessel was heated to 400 to 500°C, and the gas phase in the gas phase reaction tube was heated to 600°C and reacted for 6 hours 30 minutes to synthesize PCS. As the DMCHS, one produced in accordance with a known production method was used.

Synthesis Example 2

PCS was synthesized in the same manner as in Synthesis Example 1 except that the reaction time was 6 hours.

Synthesis Example 3

PCS was synthesized in the same manner as in Synthesis Example 1 except that polydimethylsilane (PDMS) was charged in the liquid phase reaction vessel instead of DMCHS, and the reaction time was 8 hours.

Synthesis Example 4

PCS was synthesized in the same manner as in Synthesis Example 1 except that the reaction time was 5 hours.

2. Molecular Weight Adjustment and Removal of Impurities

Examples 1 and 2 and Comparative Examples 1 and 2

The PCS synthesized in each of Synthesis Examples 1 to 4 was dissolved in toluene at room temperature without performing molecular weight adjustment. The insoluble component was removed by filtration, and then the solvent was removed to obtain PCS as each of Examples 1 and 2 and Comparative Examples 1 and 2.

Comparative Examples 3 and 4

The molecular weight was adjusted by washing 4 times at 50°C with ethyl acetate 5 times the weight of the PCS synthesized in each of Synthesis Examples 3 and 4 to separate into a dissolved component and an insoluble component. The insoluble component was then dissolved in toluene at room temperature. The insoluble component was removed by filtration, and then the solvent was removed to obtain PCS as each of Comparative Examples 3 and 4.

Reference Example 1

PCS was obtained in the same manner as in Comparative Examples 3 and 4 except that ethyl acetate 5 times the weight of the PCS synthesized in Synthesis Example 1 was used.

Reference Examples 2 to 5

Each PCS was obtained in the same manner as in Comparative Examples 3 and 4, except that the molecular weight adjustment was performed by washing 1 to 4 times at 50°C with ethyl acetate 5 times the weight of the PCS synthesized in Synthesis Example 2.

3. Spinning

The PCS from which the insoluble component was removed was dissolved in xylene in such a manner that the viscosity of the spinning solution at 25°C was 16 to 25 Pa·s, thereby preparing a dry spinning solution. Thereafter, the prepared solution was extruded from a spinneret (nozzle) having a nozzle diameter of 65 $\mu$m and wound to obtain polycarbosilane fibers (green fibers) having a fiber diameter of 17 to 19 $\mu$m.

4. Pyrolyzing

The green fibers of PCS of Examples 1 and 2, Comparative Examples 1 to 4, and Reference Examples 1 to 5 were pyrolyzed at a highest temperature of 1000°C under the conditions shown in Table 1 to obtain silicon carbide fibers.

[Table 1]

| Temperature range | Temperature raising rate [°C/h] | Pyrolyzing atmosphere | Holding time after reaching highest temperature [h] |
|---|---|---|---|
| r.t. to 500°C | 150 | $N_2$ | |
| 500 to 800°C | 100 | 60% $H_2$/Ar | |
| 800 to 1000°C | 150 | Ar | 1 |

For the green fibers of PCS of Example 1 and Reference Example 1, silicon carbide fibers were also obtained by pyrolyzing under the condition where the highest temperature was changed to 1400°C.

5. Evaluation

Confirmation of Melting Behavior of PCS

Each of the PCS of Examples 1 and 2 and Comparative Examples 1 and 2 was charged in a glass tube, and the inside of the tube was purged with argon and sealed. This was placed in a melting point apparatus (B-545, available from Buchi) in which the temperature inside the apparatus was increased to 390°C in advance, and allowed to stand for 2 minutes. After the PCS was allowed to stand, the condition of the PCS charged in the tube was visually observed. As the PCS remained as is in powder state, it can be said that the softening point was higher, and as the amount of the PCS melted was more, it can be said that the softening point was lower.

Elemental Analysis

The oxygen contents of the PCS synthesized in Synthesis Examples 1 to 4, and PCS of Examples 1 and 2, Comparative Examples 1 to 4, and Reference Examples 1 to 5 were measured using EMGA-930, available from Horiba, Ltd. The elemental analysis values of carbon atoms were measured using a carbon-sulfur analyzer CS844, available from LECO Corporation. The elemental analysis values of hydrogen atoms were measured using Series II CHNS/O ANALYZER 2400, available from Perkin Elmer. The elemental analysis value of silicon atoms was a remaining amount obtained by subtracting the elemental analysis values of carbon and hydrogen and the oxygen content from the total ratio (100%).

Measurement of Molecular Weight

The molecular weights of the PCS synthesized in Synthesis Examples 1 to 4 and the PCS of Examples 1 and 2, Comparative Examples 1 to 4, and Reference Examples 1 to 5 were determined by GPC measurement under the following conditions.

Apparatus name: HPLC, available from Shimadzu Corporation
Columns: one KF-604, one KF-602, and one KF-601 are connected in this order from the pump side for use (all available from Showa Denko K.K.)
Measurement solvent: Toluene
Flow rate: analytical unit and reference: 0.40 mL/min
Oven: 40°C
Detector: differential refractometer (RID-20A available from Shimadzu Corporation)
Sample solution: 0.5 wt.%

$^1$H-NMR Analysis

The PCS synthesized in Synthesis Examples 1 to 4 and the PCS of Examples 1 and 2, Comparative Examples 1 to 4, and Reference Examples 1 to 5 were dissolved in deuterated chloroform, and subjected to $^1$H-NMR analysis under the following conditions. Integration values were calculated using a signal of 5.5 to 3.5 ppm as a signal derived from hydrogen on tertiary silicon (-SiH<), a signal of 1.0 to 0 ppm as a signal derived from hydrogen on primary carbon ($CH_3$-), a

signal of 0 to -0.4 ppm as a signal derived from hydrogen on secondary carbon ($-CH_2-$), and a signal of -0.4 to -1.0 ppm as a signal derived from hydrogen on tertiary carbon (-CH<). Note that no signal derived from hydrogen on primary and secondary silicon could be confirmed.

Measuring instrument: JNM-ECZ600R/S1 (available from JEOL Ltd.)
Number of scans: 8

$^{29}$Si-NMR Analysis

The PCS synthesized in Synthesis Examples 1 to 4 and the PCS of Examples 1 and 2, Comparative Examples 1 to 4, and Reference Examples 1 to 5 were dissolved in deuterated chloroform, and subjected to $^{29}$Si-NMR analysis under the following conditions. Integration values were calculated using a signal of 10 to -8 ppm as a signal derived from quaternary silicon (>Si<), and a signal of -8 to -24 ppm as a signal derived from tertiary silicon (-SiH<). Note that no signal derived from primary and secondary silicon could be confirmed.

Measuring instrument: JNM-ECZ600R/S1 (available from JEOL Ltd.)
Measurement method details: no rotation; 45° pulse irradiation; acquisition time 0.659 seconds; measurement with a pulse sequence at a delay interval of 16 seconds
Number of scans: 512

Measurement of Spinning Solution Viscosity

The viscosity of the dry spinning solution was measured using an E-type viscosimeter (ARES-G2 available from TA Instruments) under conditions of a temperature of 25°C and a shear rate of 200 sec$^{-1}$.

Calculation of Bonding Index

Calculation was performed according to Formulas (1) to (20) described in the above-described embodiment. However, neither primary nor secondary silicon was confirmed.

Yield

The yield in the polycarbosilane synthesis step was calculated as a weight yield in percentage obtained by dividing the weight of PCS obtained from the liquid phase reaction vessel by the weight of the raw materials charged into the reaction vessel.
The PCS yield after molecular weight adjustment was calculated as a weight yield in percentage obtained by dividing the dry weight of PCS obtained after the insoluble component removal subsequent to molecular weight adjustment by the weight of PCS before molecular weight adjustment.
The ceramic yield in the pyrolyzing step was calculated as a weight yield in percentage obtained by dividing the weight of the SiC fibers after pyrolyzing by the green fiber weight charged in the pyrolyzing apparatus.
The total yield after the synthesis step was calculated as the product of the PCS yield after molecular weight adjustment and the ceramic yield. However, in a case where molecular weight adjustment was not performed, the PCS yield after molecular weight adjustment was taken as 100% for use in calculation.

Fiber Diameter

The diameters of the SiC fibers were measured at a magnification of 2000 times using an optical microscope VHX-5000 available from KEYENCE CORPORATION.

Tensile Strength

STA-1150 available from ORIENTEC CO., LTD. was used to perform a tensile test of a monofilament at a gauge length of 25 mm and a cross head speed of 5 mm/min, thereby measuring a breaking stress. The tensile strength was obtained by dividing the measured breaking stress by the cross-sectional area of the SiC fiber. The tensile strength in the present application was an average value obtained by performing the tensile test 10 times.

Modulus of Elasticity

The modulus of elasticity was calculated by dividing the obtained tensile strength by an elongation percentage with respect to a gauge length at the time of the tensile test.

6. Results

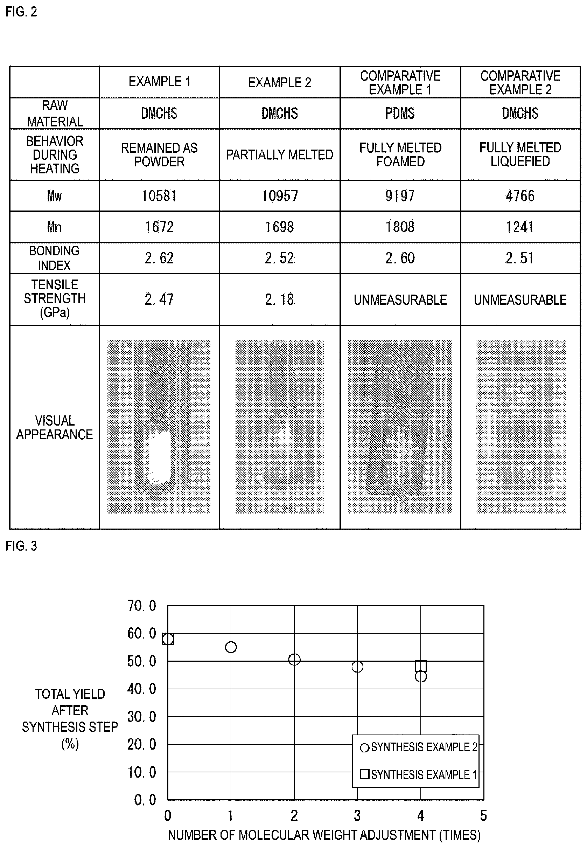

The evaluation results are shown in Tables 2 to 5. Specifically, the evaluation results of the PCS after synthesis are shown in Table 2, the evaluation results of the PCS after molecular weight adjustment and the insoluble component removal step are shown in Table 3, the evaluation results of the PCS fibers after spinning are shown in Table 4, and the evaluation results of the SiC fibers after pyrolyzing are shown in Table 5. In addition, the confirmed results of melting behavior of the PCS and the tensile strength of the SiC fibers obtained by the pyrolyzing at 1000°C are shown in FIG. 2. Note that, in Tables 2 to 5 and FIG. 2, a bar (-) was entered for an item in which no data was measured, and "unmeasurable" was entered for an item in which no data could be measured. Furthermore, the description for "PCS yield after molecular weight adjustment (%)", "ceramic yield (%)", and "total yield after synthesis step (%)" are the same as those in "1. Method for Producing Polycarbosilane for Silicon Carbide Fiber Production" and "2. Method for Producing Silicon Carbide Fiber".

[Table 2]

| | Polycarbosilane synthesis step | | | | | | | | |
|---|---|---|---|---|---|---|---|---|---|
| | Raw material | First temperature [°C] | Second temperature [°C] | Reaction time | Bonding Index | Mw | Mn | Mw/Mn | Yield [%] |
| Synthesis Example 1 | DMCHS | 400 to 500 | 600 | 6 hours 30 minutes | 2.62 | 11474 | 1854 | 6.19 | 60.7 |
| Synthesis Example 2 | DMCHS | | 600 | 6 hours | 2.52 | 10630 | 1726 | 6.16 | 60.0 |
| Synthesis Example 3 | PDMS | | 600 | 8 hours | 2.60 | 10167 | 1850 | 5.50 | 57.2 |
| Synthesis Example 4 | DMCHS | | 600 | 5 hours | 2.51 | 4813 | 1209 | 3.98 | 61.1 |

[Table 3]

| | Molecular weight adjustment step | | | | | | |
|---|---|---|---|---|---|---|---|
| | Synthesis Example | Number of molecular weight adjustment | PCS yield after molecular weight adjustment [%] | Mw | Mn | Mw/Mn | Bonding Index |
| Example 1 | Synthesis Example 1 | 0 | - | 10581 | 1672 | 6.33 | 2.62 |
| Example 2 | Synthesis Example 2 | 0 | - | 10957 | 1698 | 6.45 | 2.52 |
| Comparative Example 1 | Synthesis Example 3 | 0 | - | 9197 | 1808 | 5.09 | 2.60 |
| Comparative Example 2 | Synthesis Example 4 | 0 | - | 4766 | 1241 | 3.84 | 2.51 |
| Comparative Example 3 | Synthesis Example 3 | 4 | 62.1 | 14225 | 5988 | 2.38 | 2.56 |
| Comparative Example 4 | Synthesis Example 4 | 4 | 41.8 | 8368 | 5123 | 1.63 | 2.57 |
| Reference Example 1 | Synthesis Example 1 | 4 | 69.8 | 14100 | 4927 | 2.86 | 2.63 |

(continued)

| | | Molecular weight adjustment step | | | | | |
|---|---|---|---|---|---|---|---|
| | Synthesis Example | Number of molecular weight adjustment | PCS yield after molecular weight adjustment [%] | Mw | Mn | Mw/Mn | Bonding Index |
| Reference Example 2 | Synthesis Example 2 | 1 | 80.8 | 11467 | 2811 | 4.08 | 2.58 |
| Reference Example 3 | Synthesis Example 2 | 2 | 72.9 | 12858 | 3974 | 3.24 | 2.59 |
| Reference Example 4 | Synthesis Example 2 | 3 | 67.8 | 12882 | 4462 | 2.89 | 2.62 |
| Reference Example 5 | Synthesis Example 2 | 4 | 64.2 | 13487 | 5314 | 2.54 | 2.61 |

[Table 4]

| | Spinning step | | | | |
|---|---|---|---|---|---|
| | Solution concentration [wt%] | Viscosit y [Pa•S] | Discharge pressure [MPa] | Spinning speed [mg/min] | Green fiber diameter [μm] |
| Example 1 | 61.9 | 17.2 | 2.4 | 21.9 | 18.5 |
| Example 2 | 64.1 | 18.5 | 2.9 | 17.0 | 17.9 |
| Comparative Example 1 | 63.8 | 16.6 | 2.4 | 19.9 | 17.8 |
| Comparative Example 2 | 69.8 | 19.6 | 3.3 | 20.6 | 18.1 |
| Comparative Example 3 | 54.4 | 17.6 | 2.7 | 19.2 | 17.7 |
| Comparative Example 4 | 56.3 | 20.2 | 3.3 | 19.8 | 17.8 |
| Reference Example 1 | 55.2 | 20.0 | 2.5 | 21.0 | 17.8 |
| Reference Example 2 | 59.5 | 18.8 | 2.5 | 18.5 | 17.9 |
| Reference Example 3 | 60.7 | 23.7 | 3.1 | 18.8 | 18.2 |
| Reference Example 4 | 56.2 | 23.2 | 3.0 | 19.1 | 18.1 |
| Reference Example 5 | 54.5 | 24.3 | 2.0 | 16.3 | 18.1 |

[Table 5]

| | Pyrolyzing step | | | | | | | | |
| | Pyrolyzing temperature: 1000°C | | | | | Pyrolyzing temperature: 1400°C | | | |
| | Pyrolyzed fiber diameter [μm] | Tensile strength [GPa] | Modulus of elasticity [GPa] | Ceramic yield [%] | Total yield after synthesis step [%] | Pyrolyzed fiber diameter [μm] | Tensile strength [GPa] | Modulus of elasticity [GPa] | Ceramic yield [%] |
|---|---|---|---|---|---|---|---|---|---|
| Example 1 | 10.53 | 2.47 | 253 | 58.0 | 58.0 | 10.40 | 1.57 | 318 | 60.7 |
| Example 2 | 9.55 | 2.18 | 245 | 58.0 | 58.0 | - | - | - | - |
| Comparative Example 1 | Unmeasurable | Unmeasurable | Unmeasurable | - | - | - | - | - | - |
| Comparative Example 2 | Unmeasurable | Unmeasurable | Unmeasurable | - | - | - | - | - | - |
| Comparative Example 3 | 10.06 | 1.93 | 247 | 70.8 | 44.0 | - | - | - | - |
| Comparative Example 4 | 10.50 | 1.76 | 251 | 68.5 | 28.6 | - | - | - | - |
| Reference Example 1 | 10.79 | 2.88 | 237 | 69.1 | 48.3 | 10.47 | 2.80 | 346 | 73.9 |
| Reference Example 2 | 8.46 | 2.34 | 234 | 68.1 | 55.0 | - | - | - | - |
| Reference Example 3 | 10.90 | 2.18 | 249 | 69.5 | 50.6 | - | - | - | - |
| Reference Example 4 | 10.51 | 2.27 | 243 | 70.8 | 48.0 | - | - | - | - |
| Reference Example 5 | 9.87 | 2.26 | 263 | 69.3 | 44.5 | - | - | - | - |

Furthermore, FIG. 3 is a chart showing the relationship between the number of molecular weight adjustment of the polycarbosilane synthesized in Synthesis Example 1 and Synthesis Example 2 and total yield (%) after synthesis step. In FIG. 3, the horizontal axis shows the number of molecular weight adjustment, and the vertical axis shows the total yield (%) after the synthesis step.

From Tables 2 to 5 and FIG. 3, it was found that the polycarbosilane produced by the method for producing polycarbosilane according to an aspect of the present invention can produce silicon carbide fibers without performance of the molecular weight adjustment step. From FIG. 2, it was found that the polycarbosilane produced by the method for producing polycarbosilane according to an aspect of the present invention has a high softening point. Thus, it was shown that, for the polycarbosilane produced by the method for producing polycarbosilane according to an aspect of the present invention, fibers are less likely to fuse during pyrolyzing in a process of producing silicon carbide fibers. From those described above, it was shown that, according to the method for producing polycarbosilane of an aspect of the present invention, the polycarbosilane for silicon carbide fiber production can be produced by fewer processes than known production methods, in a method for producing polycarbosilane by a liquid phase-gas phase thermolysis condensation method.

Furthermore, from Table 3, Table 5, and FIG. 3, it was found that the polycarbosilane produced by the method for producing polycarbosilane according to an aspect of the present invention has a more increased yield of the polycarbosilane after the molecular weight adjustment compared to that of polycarbosilane produced by undergoing a molecular weight adjustment step. Thus, it was found that the total yield after synthesis step increases. From those described above, it was found that, according to the method for producing silicon carbide according to an aspect of the present invention, the yield of the silicon carbide fibers from the polycarbosilane can be improved.

**INDUSTRIAL APPLICABILITY**

The present invention can be used in production of silicon carbide fibers.

**REFERENCE SIGNS LIST**

1 Liquid phase reaction vessel
2 Liquid phase heater
3 Liquid phase thermocouple
4 Gas phase reaction tube
5 Gas phase heater
6 Gas phase thermocouple
7 First cooling tube
8 Flowmeter
9 Valve
10 Liquid phase-gas phase thermolysis apparatus

**Claims**

1. A method for producing silicon carbide fibers, the method comprising:
   a polycarbosilane synthesis step of synthesizing polycarbosilane having a weight average molecular weight of 9000 or greater, the polycarbosilane synthesis step comprising performing repeatedly processes of:

   heating a raw material containing a cyclic silane compound at a first temperature to generate a gas phase, heating the gas phase at a second temperature that is higher than the first temperature to generate polycarbosilane, and by cooling the polycarbosilane to return to the raw material and heating at the first temperature, increasing a molecular weight of the polycarbosilane;
   a spinning step of forming the polycarbosilane synthesized in the polycarbosilane synthesis step into a fibrous form; and
   a pyrolyzing step of pyrolyzing the polycarbosilane fiber produced in the spinning step; wherein the method does not comprise a step of adjusting the molecular weight by removing polycarbosilane having a molecular weight of 5500 or less from the polycarbosilane synthesized in the polycarbosilane synthesis step.

2. The method for producing silicon carbide fibers according to claim 1, wherein, in the polycarbosilane synthesis step, polycarbosilane having a bonding index, which is an indicator of degree of branching, as expressed by Formula (1) of 2.52 or greater is synthesized:

[Math. 1]

$$\text{BONDING INDEX} = \frac{X_{CH3} \times 1 + X_{CH2} \times 2 + X_{CH} \times 3 + X_C \times 4 + Y_{SiH3} \times 1 + Y_{SiH2} \times 2 + Y_{SiH} \times 3 + Y_{Si} \times 4}{X_{CH3} + X_{CH2} + X_{CH} + X_C + Y_{SiH3} + Y_{SiH2} + Y_{SiH} + Y_{Si}} \cdots (1)$$

where in Formula (1),

$X_{CH3}$, $X_{CH2}$, $X_{CH}$, and $X_C$ are values obtained by dividing weight percentages of primary, secondary, tertiary, and quaternary carbon atoms, respectively, by 12, and

$Y_{SiH3}$, $Y_{SiH2}$, $Y_{SiH}$, and $Y_{Si}$ are values obtained by dividing weight percentages of primary, secondary, tertiary, and quaternary silicon atoms, respectively, by 28.086.

3. The method for producing silicon carbide fibers according to claim 1 or 2, wherein, in the polycarbosilane synthesis step, polycarbosilane satisfying the following condition is synthesized:

a synthesized polycarbosilane powder remains in powder state when heated at 390°C for 2 minutes.

4. The method for producing silicon carbide fibers according to claim 1 or 2, wherein the cyclic silane compound is dodecamethylcyclohexasilane.

5. The method for producing silicon carbide fibers according to claim 3, wherein the cyclic silane compound is dodecamethylcyclohexasilane.

**Patentansprüche**

1. Verfahren zum Herstellen von Siliziumcarbidfasern, das Verfahren umfassend:

einen Polycarbosilansyntheseschritt zum Synthesieren von Polycarbosilan, das ein Gewichtsmittel des Molekulargewichts von 9000 oder größer aufweist, der Polycarbosilansyntheseschritt umfassend ein wiederholtes Durchführen von Prozessen von:

Erhitzen eines Rohmaterials, das eine zyklische Silanverbindung enthält, bei einer ersten Temperatur, um eine Gasphase zu erzeugen, Erhitzen der Gasphase bei einer zweiten Temperatur, die höher als die erste Temperatur ist, um Polycarbosilan zu erzeugen, und durch Abkühlen des Polycarbosilans, um zu dem Rohmaterial zurückzukehren, und Erhitzen bei der ersten Temperatur, Erhöhen eines Molekulargewichts des Polycarbosilans;

einen Spinnschritt eines Ausbildens des Polycarbosilans, das in dem Polycarbosilansyntheseschritt synthetisiert wird, in eine faserige Form; und

einen Pyrolyseschritt eines Pyrolysierens der Polycarbosilanfaser, die in dem Spinnschritt hergestellt wird; wobei das Verfahren keinen Schritt eines Einstellens des Molekulargewichts durch ein Entfernen von Polycarbosilan, das ein Molekulargewicht von 5500 oder weniger aufweist, aus dem Polycarbosilan umfasst, das in dem Polycarbosilansyntheseschritt synthetisiert wird.

2. Verfahren zum Herstellen von Siliziumcarbidfasern nach Anspruch 1, wobei in dem Polycarbosilansyntheseschritt Polycarbosilan, das einen Bindungsindex aufweist, der ein Indikator des Verzweigungsgrads ist, wie durch Formel (1) ausgedrückt, von 2,52 oder größer synthetisiert wird:

[Math. 1]

$$\text{BINDUNGSINDEX} = \frac{X_{CH3} \times 1 + X_{CH2} \times 2 + X_{CH} \times 3 + X_C \times 4 + Y_{SiH3} \times 1 + Y_{SiH2} \times 2 + Y_{SiH} \times 3 + Y_{Si} \times 4}{X_{CH3} + X_{CH2} + X_{CH} + X_C + Y_{SiH3} + Y_{SiH2} + Y_{SiH} + Y_{Si}} \cdots (1)$$

wobei in Formel (1),

$X_{CH3}$, $X_{CH2}$, $X_{CH}$, und $X_C$ Werte sind, die durch ein Dividieren von Gewichtsprozentsätzen von primären, sekundären, tertiären beziehungsweise quaternären Kohlenstoffatomen durch 12 erhalten werden und

$Y_{SiH3}$, $Y_{SiH2}$, $Y_{SiH}$ und $Y_{Si}$ Werte sind, die durch ein Dividieren von Gewichtsprozentsätzen von primären, sekundären, tertiären beziehungsweise quaternären Siliziumatomen durch 28,086 erhalten werden.

3. Verfahren zum Herstellen von Siliziumcarbidfasern nach Anspruch 1 oder 2, wobei in dem Polycarbosilansyntheseschritt Polycarbosilan, das die folgende Bedingung erfüllt, synthetisiert wird:
ein synthetisiertes Polycarbosilanpulver verbleibt in einem Pulverzustand, wenn es 2 Minuten lang auf 390 °C erhitzt wird.

4. Verfahren zum Herstellen von Siliziumcarbidfasern nach Anspruch 1 oder 2, wobei die zyklische Silanverbindung Dodecamethylcyclohexasilan ist.

5. Verfahren zum Herstellen von Siliziumcarbidfasern nach Anspruch 3, wobei die zyklische Silanverbindung Dodecamethylcyclohexasilan ist.

**Revendications**

1. Procédé de production de fibres de carbure de silicium, le procédé comprenant :
une étape de synthèse de polycarbosilane consistant à synthétiser un polycarbosilane ayant une masse moléculaire moyenne en poids de 9000 ou plus, l'étape de synthèse de polycarbosilane comprenant la réalisation répétée des processus consistant à :

chauffer une matière première contenant un composé silane cyclique à une première température pour générer un phase gazeuse, chauffer la phase gazeuse à une deuxième température qui est supérieure à la première température pour générer du polycarbosilane, et en refroidissant le polycarbosilane pour qu'il retourne à la matière première et en chauffant à la première température, augmenter une masse moléculaire du polycarbosiane ;
une étape de filage consistant à mettre le polycarbosilane synthétisé lors de l'étape de synthèse de polycarbosilane sous forme fibreuse ; et
une étape de pyrolyse consistant à pyrolyser la fibre de polycarbosilane produite lors de l'étape de filage ; dans lequel le procédé ne comprend pas d'étape d'ajustement de la masse moléculaire par élimination du polycarbosilane ayant une masse moléculaire de 5500 ou moins du polycarbosilane synthétisé lors de l'étape de synthèse de polycarbosilane.

2. Procédé de production de fibres de carbure de silicium selon la revendication 1, dans lequel, lors de l'étape de synthèse de polycarbosilane, un polycarbosilane ayant un indice de liaison, qui est un indicateur du degré de ramification, tel qu'exprimé par la Formule (1) de 2,52 ou plus, est synthétisé :
[Math. 1]

$$\text{INDICE DE LIAISON} = \frac{X_{CH3} \times 1 + X_{CH2} \times 2 + X_{CH} \times 3 + X_C \times 4 + Y_{SiH3} \times 1 + Y_{SiH2} \times 2 + Y_{SiH} \times 3 + Y_{Si} \times 4}{X_{CH3} + X_{CH2} + X_{CH} + X_C + Y_{SiH3} + Y_{SiH2} + Y_{SiH} + Y_{Si}} \cdots (1)$$

où dans la Formule (1),

$X_{CH3}$, $X_{CH2}$, $X_{CH}$, et $X_C$ sont des valeurs obtenues en divisant les pourcentages en poids d'atomes de carbone primaires, secondaires, tertiaires et quaternaires, respectivement, par 12, et
$Y_{siH3}$, $Y_{SiH2}$, $Y_{SiH}$, et $Y_{Si}$ sont des valeurs obtenues en divisant des pourcentages en poids d'atomes de silicium primaires, secondaires, tertiaires et quaternaires, respectivement, par 28,086.

3. Procédé de production de fibres de carbure de silicium selon la revendication 1 ou 2, dans lequel, lors de l'étape de synthèse de polycarbosilane, un polycarbosilane satisfaisant à la condition suivante est synthétisé :
une poudre de polycarbosilane synthétisée reste à l'état de poudre lorsqu'elle est chauffée à 390 °C pendant 2 minutes.

4. Procédé de production de fibres de carbure de silicium selon la revendication 1 ou 2, dans lequel le composé silane cyclique est le dodécaméthylcyclohexasilane.

**5.** Procédé de production de fibres de carbure de silicium selon la revendication 3, dans lequel le composé silane cyclique est le dodécaméthylcyclohexasilane.

FIG. 1

INERT GAS →

GAS OUTLET →

FIG. 2

|  | EXAMPLE 1 | EXAMPLE 2 | COMPARATIVE EXAMPLE 1 | COMPARATIVE EXAMPLE 2 |
|---|---|---|---|---|
| RAW MATERIAL | DMCHS | DMCHS | PDMS | DMCHS |
| BEHAVIOR DURING HEATING | REMAINED AS POWDER | PARTIALLY MELTED | FULLY MELTED FOAMED | FULLY MELTED LIQUEFIED |
| Mw | 10581 | 10957 | 9197 | 4766 |
| Mn | 1672 | 1698 | 1808 | 1241 |
| BONDING INDEX | 2.62 | 2.52 | 2.60 | 2.51 |
| TENSILE STRENGTH (GPa) | 2.47 | 2.18 | UNMEASURABLE | UNMEASURABLE |
| VISUAL APPEARANCE | | | | |

FIG. 3

**REFERENCES CITED IN THE DESCRIPTION**

**Patent documents cited in the description**

- JP 2019137935 A
- JP H04194028 A

- JP H01257177 A

**Non-patent literature cited in the description**

- **K. OKAMURA**. Ceramic fibres from polymer precursors. *Composites*, 01 April 1987, vol. 18, 107-120